# EUROPEAN PATENT SPECIFICATION

(11) **EP 3 087 118 B1**
(45) Date of publication and mention of the grant of the patent: **26.07.2017**
(21) Application number: 14815411.5
(22) Date of filing: 11.12.2014
(51) Int. Cl.: C08G 63/199, C08G 18/42, C08G 18/66, C08G 18/75, C08G 18/76, C09D 175/06, C09J 175/06, C08G 63/553, C09J 167/02, C09D 167/02, C08G 63/672, C08G 63/16, C08G 18/34, C08G 18/12

(54) **A POLYOL BASED ON DIMER FATTY ACID RESIDUES AND THE CORRESPONDING POLYURETHANES**
POLYOL BASIEREND AUF DIMERISIERTEN FETTSÄURERESTEN UND DIE ENTSPRECHENDEN POLYURETHANE
POLYOL BASÉ SUR RESIDUS D' ACIDES GRAS DIMÉRIQUES ET POLYURÉTHANES CORRESPONDANTS

(30) Priority: 23.12.2013 GB 201322933
(43) Date of publication of application: 02.11.2016
(73) Proprietor: Croda International PLC, Goole, Yorkshire DN14 9AA (GB)
(72) Inventor: SMITS, Angela Leonarda Maria, 3708 CB Zeist (NL); HONCOOP, Wilhelmus Adrianus Jacobus, 2861 TM Bergambacht (NL); TRIET, Remco Benjamin Van, 2811 WC Reeuwijk (NL)
(74) Representative: Craven, Ian
(86) International application number: PCT/GB2014/053661
(87) International publication number: WO 2015/097433

(56) References cited:
- US-A1- 2010 112 333
- MICHAEL A. R. MEIER ET AL.: "Self-meathesis of fatty acid methyl esters: full conversion by choosing the appropriate plant oil", RSC ADVANCES, vol. 3, 30 January 2013 (2013-01-30), pages 4927-4934, XP002735631, RSC DOI: 10.1039/c3ra40330k
- DATABASE WPI Week 200311 Thomson Scientific, London, GB; AN 2003-114530 XP002735632, & JP 2002 212273 A (DAINIPPON INK & CHEM INC) 31 July 2002 (2002-07-31)

## Description

The present invention relates to a polyol, a polyurethane comprising the polyol, the use of the polyol and a method of making the polyurethane.

The polyol of the present invention may be used in making polyurethanes. Polyurethanes are extremely versatile materials and have been used in a wide variety of applications such as foam insulation, car seats, paint coatings, adhesives, sealants, elastomers and abrasion resistant coatings.

Polyurethane paint coating compositions are surface protective and/or decorative coatings which may be applied to substrates and allowed to dry or cure to form continuous protective and decorative films. Such coatings may be applied to a wide variety of substrates including metals, wood, plastics, and plaster. Important properties of the formed film include hardness and resistance to water (hydrolysis resistance).

Polyurethane dispersion polymers are an important class of binders for aqueous coating compositions, as they produce excellent properties, such as chemical and stain resistance, hardness and toughness in the solid coating. Polyurethanes are also used in a wide variety of forms, for example non-cellular materials such as elastomers, and cellular materials such as low density flexible foams, high density flexible foams, and microcellular foams. Polyurethanes, both in dispersion and non-dispersion forms, are also known to find use in adhesives, for example in deployment in the furniture industry. A polyurethane may be made by reacting an isocyanate with a polyol.

Meier et al, RSC Advances Vol 3, 30 Jan 2013, pp 4927-4934 discloses self-methathesis of fatty acid methyl esters and US2010/112333 discloses a microcellular polyurethane obtainable by reacting a polyisocyanate, a polyester formed from a dimer fatty acid and/or dimer fatty diol, and a chain extender.

The present invention seeks to provide an improved polyol which may be used in making a polyurethane so that one or more properties (e.g. physical properties) of the polyurethane is improved. These improved properties may include one or more of hardness, tensile strength, elongation and chemical or hydrolysis resistance or an improvement in a combination of these properties.

The present invention is based in part on the recognition by the applicant that the use of a linear or branched diacid or diol residue having 17 to 32 carbon atoms in combination with a dimer fatty residue in a polyol may provide the polyol with improved properties which balance flexibility and chemical/hydrolysis resistance with increased hardness or tensile strength. Without being bound by theory, it is believed that the dimer fatty residue may provide the flexibility and chemical/hydrolysis resistance due to its amorphous and hydrophobic nature and the linear or branched diacid or diol residue comprising 17 to 32 carbon atoms may provide the hardness or tensile strength due to its crystalline or semicrystalline nature.

Thus viewed from a first aspect the present invention provides a polyol comprising:
a) at least one dimer fatty residue selected from a dimer fatty diacid residue or a dimer fatty diol residue; and
b) at least one residue of a linear or branched C17 to C32 dicarboxylic acid or diol;
wherein the polyol comprises at least two hydroxyl end groups.

Viewed from a second aspect, the present invention provides a polyurethane comprising a polyol of the first aspect.

Viewed from a third aspect, the present invention provides a method of making a polyurethane comprising reacting a polyol of the first aspect with an isocyanate to form:
(i) the polyurethane; or
(ii) an isocyanate-terminated pre-polymer which is then reacted with a chain extender to form the polyurethane.

Viewed from a fourth aspect, the present invention provides the use of a polyol of the first aspect to form a polyurethane.

Viewed from a fifth aspect, the present invention provides an adhesive, coating, elastomer or sealant comprising a polyol of the first aspect or a polyurethane of the second aspect.

It will be understood that any upper or lower quantity or range limit used herein may be independently combined.

It will be understood that, when describing the number of carbon atoms in a substituent group (e.g. 'C1 to C6'), the number refers to the total number of carbon atoms present in the substituent group, including any present in any branched groups. Additionally, when describing the number of carbon atoms in, for example fatty acids, this refers to the total number of carbon atoms including the one at the carboxylic acid, and any present in any branch groups.

Many of the chemicals which may be used to produce the polyol or polyurethane of the present invention are obtained from natural sources. Such chemicals typically include a mixture of chemical species due to their natural origin. Due to the presence of such mixtures, various parameters defined herein can be an average value and may be non-integral.

The term 'polyol' is well known in the art, and refers to a molecule comprising more than one hydroxyl group. The term 'active hydrogen' refers to the hydrogen atoms present as part of the hydroxyl groups of the polyol.

The term 'polyester' as used herein refers to a molecule or group with more than one ester bond.

The term 'polyether' as used herein refers to a molecule or group with more than one ether bond.

The term 'dimer fatty residue' as used herein, unless otherwise defined, refers to a residue of a dimer fatty acid (also referred to as a dimer fatty diacid) or a residue of a dimer fatty diacid derivative such as a dimer fatty diol or a dimer fatty diamine.

The term 'functionality' as used herein with regard to a molecule or part of a molecule refers to the number of functional groups in that molecule or part of a molecule. A 'functional group' refers to a group in a molecule which may take part in a chemical reaction. For example, a carboxylic acid group, a hydroxyl group and an amine group are all examples of functional groups. For example, a diacid (with two carboxylic acid groups) and a diol (with two hydroxyl groups) both have a functionality of 2 and a triacid and triol both have a functionality of 3.

The term 'dimer fatty acid' (also referred to as dimer fatty diacid) is well known in the art, and refers to the dimerisation products of mono- or polyunsaturated fatty acids and/or esters thereof. The related term trimer fatty acid similarly refers to trimerisation products of mono-or polyunsaturated fatty acids and/or esters thereof.

Dimer fatty acids are described in T. E. Breuer, 'Dimer Acids', in J. I. Kroschwitz (ed.), Kirk-Othmer Encyclopedia of Chemical Technology, 4th Ed., Wily, New York, 1993, Vol. 8, pp. 223-237. They are prepared by polymerising fatty acids under pressure, and then removing most of the unreacted fatty acid starting materials by distillation. The final product usually contains some small amounts of mono fatty acid and trimer fatty acids, but is mostly made up of dimer fatty acids. The resultant product can be prepared with various proportions of the different fatty acids as desired.

The ratio of dimer fatty acids to trimer fatty acids can be varied, by modifying the processing conditions and/or the unsaturated fatty acid feedstock. The dimer fatty acid may be isolated in substantially pure form from the product mixture, using purification techniques known in the art, or alternatively a mixture of dimer fatty acid and trimer fatty acid may be employed.

The dimer fatty acids or dimer fatty residues used in the present invention are preferably derived from the dimerisation products of C10 to C30 fatty acids, more preferably C12 to C24 fatty acids, particularly C14 to C22 fatty acids, further preferably C16 to C20 fatty acids, and especially C18 fatty acids. Thus, the resulting dimer fatty acids preferably comprise in the range from 20 to 60, more preferably 24 to 48, particularly 28 to 44, further preferably 32 to 40, and especially 36 carbon atoms.

The fatty acids, from which the dimer fatty acids are derived, may be selected from linear or branched unsaturated fatty acids. The unsaturated fatty acids may be selected from fatty acids having either a cis/trans configuration, and may have one or more than one unsaturated double bonds.

Preferably, the fatty acids used are linear monounsaturated fatty acids.

The dimer fatty acids may be hydrogenated. The dimer fatty acids may be non-hydrogenated. A hydrogenated dimer fatty residue (from a diacid, diol or diamine) may have better oxidative or thermal stability which may be desirable in a polyurethane formed from the co-polymer polyol.

Suitable dimer fatty acids are preferably derived from (i.e. are the dimer equivalents of) the dimerisation products of oleic acid, linoleic acid, linolenic acid, palmitoleic acid, or elaidic acid. In particular, suitable dimer fatty acids are derived from oleic acid.

The dimer fatty acids may be dimerisation products of unsaturated fatty acid mixtures obtained from the hydrolysis of natural fats and oils, e.g. sunflower oil, soybean oil, olive oil, rapeseed oil, cottonseed oil, or tall oil.

The molecular weight (weight average) of the dimer fatty acid is preferably in the range from 450 to 690, more preferably 500 to 640, particularly 530 to 610, and especially 550 to 590.

In addition to the dimer fatty acids, dimerisation usually results in varying amounts of trimer fatty acids (so-called "trimer"), oligomeric fatty acids, and residues of monomeric fatty acids (so-called "monomer"), or esters thereof, being present. The amount of monomer can, for example, be reduced by distillation.

Similarly, the optional trimer fatty acids are preferably derived from the trimerisation products of the materials mentioned with regard to the dimer fatty acids, and are preferably trimers of C10 to C30, more preferably C12 to C24, particularly C14 to C22, further preferably C16 to C20 fatty acids, and especially C18 fatty acids. Thus, the trimer fatty acids preferably contain in the range from 30 to 90, more preferably 36 to 72, particularly 42 to 66, further preferably 48 to 60, and especially 54 carbon atoms.

The molecular weight (weight average) of the trimer fatty triacids is preferably in the range from 750 to 950, more preferably 790 to 910, particularly 810 to 890, and especially 830 to 870.

In one embodiment of the present invention, tetramer fatty acids and higher oligomers (hereinafter both referred to as oligomeric acids) are formed during production of the dimer fatty acid. Such oligomeric acids may therefore also be present in the dimer fatty acids used in the present invention, in combination with trimer fatty acids and/or dimer fatty acids and/or mono fatty monoacids.

The oligomeric acids are preferably oligomers, containing 4 or more units derived from C10 to C30, more preferably C12 to C24, particularly C14 to C22, and especially C18 fatty acids. The molecular weight (weight average) of the oligomeric acid is suitably greater than 1,000, preferably in the range from 1,200 to 1,800, more preferably 1,300 to 1,700, particularly 1,400 to 1,600, and especially 1,400 to 1,550.

The dimer fatty acid used in the present invention preferably may have a dimer fatty acid (or dimer) content of greater than 60 wt.%, more preferably greater than 70 wt.%, particularly greater than 80 wt.%, and especially greater than 85 wt.%. Most preferably, the dimer content of the dimer fatty acid is in the range from 90 wt.% to 99 wt.%.

In an alternative embodiment, the dimer fatty acid preferably has a dimer fatty acid (or dimer) content in the range from 70 wt.% to 96 wt.%. This may be applicable in particular for two component or cross-linked systems.

In addition, particularly preferred dimer fatty acids may have a trimer fatty acid (or trimer) content of less than 40 wt.%, more preferably less than 30 wt.%, particularly less than 20 wt.%, and especially less than 15 wt.%. The trimer fatty acid content may be less than 1 wt.%.

Furthermore, the dimer fatty acid preferably comprises less than 10 wt.%, more preferably less than 6 wt.%, particularly less than 4 wt.%, and especially less than 3.5 wt.% of mono fatty monoacid (or monomer).

All of the above weight percentage values are based on the total weight of polymerised fatty acids and mono fatty acids present.

A dimer fatty diacid (or dimer fatty acid) may be converted to a dimer fatty diol as is known in the art. A dimer fatty diol may have properties as described herein with regard to a dimer fatty diacid (or dimer fatty acid) except that the acid groups in the dimer fatty diacid are replaced with hydroxyl groups in the dimer fatty diol. In a similar manner, a trimer fatty triacid may be converted to a trimer fatty triol which may have properties as described herein with regard to a trimer fatty triacid.

The dimer fatty diol may be hydrogenated. The dimer fatty diol may be non-hydrogenated.

A dimer fatty diacid (or dimer fatty acid) may be converted to a dimer fatty diamine as is known in the art. A dimer fatty diamine may have properties as described herein with regard to a dimer fatty diacid (or dimer fatty acid) except that the acid groups in the dimer fatty diacid are replaced with amine groups in the dimer fatty diamine. In a similar manner, a trimer fatty triacid may be converted to a trimer fatty triamine which may have properties as described herein with regard to a trimer fatty triacid.

The dimer fatty diamine may be hydrogenated. The dimer fatty diamine may be non-hydrogenated.

The polyol comprises:
a) at least one dimer fatty residue selected from a dimer fatty diacid residue and a dimer fatty diol residue; and
b) at least one residue of a linear or branched C17 to C32 dicarboxylic acid or diol;
wherein the polyol comprises at least two hydroxyl end groups.

The polyol may be a diol, triol, tetrol, pentol or hexol. Preferably the polyol is a diol, triol or tetrol, more preferably a diol or triol. Most preferably, the polyol is a diol.

The weight ratio of a) to b) in the polyol may be in the range 90:10 to 30:70, preferably in the range 85:15 to 45:55.

The weight % of a) in the polyol may be at least the weight % of b).

These relative amounts of a) and b) in the polyol may provide an advantageous balance of flexibility, tensile strength, hardness and hydrolysis resistance in a polyurethane formed from the polyol.

The polyol may have a molecular weight (number average) of at least 500, preferably at least 800, more preferably at least 1000, even more preferably at least 1500, especially preferably at least 1800.

The polyol may have a molecular weight (number average) of at most 5000, preferably at most 4000, more preferably at most 3000, even more preferably at most 2500, especially preferably at most 2200.

One of the components of the polyol is:
a) at least one dimer fatty residue selected from a dimer fatty diacid residue and a dimer fatty diol residue.

The at least one dimer fatty residue may include any of the features or preferences described herein with regard to dimer fatty diacids or dimer fatty diols.

The at least one dimer fatty residue may be saturated or unsaturated. Preferably the at least one dimer fatty residue is saturated.

The dimer fatty residue is fatty in nature and this may increase the hydrophobicity of the polyol. The presence of the dimer fatty residue may make the polyol more amorphous, non-crystalline or substantially non-crystalline. The amorphousness may increase the flexibility and/or decrease the tensile strength of a polyurethane formed from the polyol.

The polyol may comprise at least 20wt% dimer fatty residue, preferably at least 30wt%. The polyol may comprise at most 80wt% dimer fatty residue, preferably at most 70wt%.

The dimer fatty residue may be a dimer fatty diacid residue.

The polyol may comprise at least 20wt% dimer fatty diacid residue, preferably at least 30wt%. The polyol may comprise at most 80wt% dimer fatty diacid residue, preferably at most 70wt%.

The polyol may comprise a dimer fatty diol residue. Dimer fatty acids are discussed herein, and dimer fatty diols may be formed by hydrogenation of the corresponding dimer fatty acid. The same preferences detailed herein for the dimer fatty acid may apply to a corresponding dimer fatty diol component of the polyol.

The polyol may comprise at least 50wt% dimer fatty diol residue, preferably at least 60wt%. The polyol may comprise at most 90wt% dimer fatty diol residue, preferably at most 80wt%.

These amounts of dimer fatty residue may provide a suitable amount of hydrophobicity and/or amorphousness to the polyol without an excessive decrease in tensile strength or hardness of a polyurethane formed from the polyol.

One of the components of the polyol is:
b) at least one residue of a linear or branched C17 to C32 dicarboxylic acid or diol.

It will be understood that b) is a non-dimeric diacid or diol and distinct from the dimer fatty diacids or diols described herein.

The presence of b) in the polyol may make the polyol more crystalline due to the long aliphatic carbon chain present in the at least one residue of a C17 to C32 linear or branched dicarboxylic acid or diol. The increased crystallinity may increase the tensile strength and/or hardness of a polyurethane formed from the polyol. It may also increase the green strength of an adhesive formed from the polyol.

The at least one residue of a C17 to C32 linear or branched dicarboxylic acid or diol may be a diacid. The at least one residue of a C17 to C32 linear or branched diacid may include the esters thereof, preferably alkyl esters and more preferably dimethyl esters.

The at least one residue of a C17 to C32 linear or branched dicarboxylic acid or diol may be linear. It may comprise terminal carboxyl or hydroxyl groups, wherein the terminal carboxyl or hydroxyl groups are bridged by an alkyl group, or an alkenyl group.

The at least one residue of a C17 to C32 linear or branched dicarboxylic acid or diol may be branched. The at least one residue of a C17 to C32 linear or branched diacid or diol may comprise at least one methyl branch. The at least one residue of a C17 to C32 linear or branched diacid or diol may comprise at least one ethyl branch.

The at least one residue of a C17 to C32 linear or branched dicarboxylic acid or diol may be saturated or unsaturated, preferably saturated.

Preferably the C17 to C32 dicarboxylic acid or diol is a linear dicarboxylic acid.

The polyol may comprise at least 10wt% of b), preferably at least 15wt%, more preferably at least 20wt%. The polyol may comprise at most 50wt% of b), preferably at most 40wt%.

These amounts of b) may provide a suitable amount of crystallinity to the polyol without an excessive decrease in flexibility of a polyurethane formed from the polyol.

The C17 to C32 dicarboxylic acid or diol may be a C18 to C26 dicarboxylic acid or diol, preferably a C18 or C26 dicarboxylic acid or diol. The C17 to C32 dicarboxylic acid or diol may be a C18 dicarboxylic acid. The C17 to C32 dicarboxylic acid or diol may be a C26 dicarboxylic acid.

The C17 to C32 diacid or diol may be derived from a C17 to C32 diacid or dialkyl ester which is obtained by a metathesis reaction, preferably a self-metathesis reaction.

The metathesis reaction may occur in the presence of a catalyst. Suitable metathesis catalysts are disclosed in WO 2008/065187 and WO 2008/034552.

Particularly preferred examples of suitable catalysts may be selected from:
[1,3-bis(2,6-diisopropylphenyl)-2-imidazolidinylidene]dichloro[2-(1-methylacetoxy) phenyl]methyleneruthenium(II);
[1,3-bis(2,4,6-trimethylphenyl)-2-imidazolidinylidene]dichloro[2-(1-methylacetoxy) phenyl]methyleneruthenium(II);
[1,3-bis(2,6-diisopropylphenyl)-2-imidazolidinylidene]dichloro[[2-(2-oxopropoxy) phenyl]methylene]ruthenium(II);
[1,3-bis(2,4,6-trimethylphenyl)-2-imidazolidinylidene]dichloro[[2-(2-oxopropoxy) phenyl]methylene]ruthenium(II);
([1,3-bis(2,4,6-trimethylphenyl)-2-imidazolidinyliden]dichloro[(2-isopropoxy)(5-trifluoracetamido)benzyliden]]ruthenium(II));
([1,3-bis(2,6-diisopropylphenyl)-2-imidazolidinyliden]dichloro[(2-isopropoxy)(5-trifluoracetamido)benzyliden]]ruthenium(II));
([1,3-bis(2,6-diisopropylphenyl)-2-imidazolidinyliden]dichloro[(2-isopropoxy)(5-isobutoxyacetamido)benzyliden]]ruthenium(II));
([1,3-bis(2,4,6-trimethylphenyl)-2-imidazolidinyliden]dichloro[(2-isopropoxy)(5-isobutoxyacetamido)benzyliden]]ruthenium(II));
([1,3-bis(2,6-diisopropylphenyl)-2-imidazolidinyliden]dichloro[(2-isopropoxy)(5-ethylesteracetamido)benzyliden]]ruthenium(II)); or
((1,3-bis(2,6-diisopropylphenyl)-imidazolidin-2-yliden)((2-ethyl-3-oxo-3,4,-dihydr-2H-benzo[b][1,4]oxazin-8-yl)methylene)ruthenium(II)chlorid).

The metathesis reaction may use a fatty acid as a feedstock. The fatty acid may be from a renewable and/or bio-based source. The component b) is preferably derived from renewable and/or bio-based sources. The level of this may be determinable by ASTM D6866 as a standardised analytical method for determining the bio-based content of samples using ¹⁴C radiocarbon dating. ASTM D6866 distinguishes carbon resulting from bio-based inputs from those derived from fossil-based inputs. Using this standard, a percentage of carbon from renewable sources can be calculated from the total carbon in the sample.

The component b) may have a renewable carbon content of at least 50 wt% when determined using ASTM D6866, preferably at least 65 wt%, more preferably at least 80 wt%.

The polyol may comprise:
c) at least one residue of a C2 to C16 acid or alcohol which has at least 2 functional groups selected from a carboxylic acid group, a hydroxyl group and mixtures thereof.

The polyol may consist of a), b) and c) or may consist essentially of a), b) and c).

The polyol may comprise at least 15wt% of c), preferably at least 20wt% of c), more preferably at least 25wt% of c). The polyol may comprise at most 60wt% of c), preferably at most 50wt% of c), more preferably at most 40wt% of c).

Preferably, the weight % of a) in the polyol is greater than the weight % of c) in the polyol.

Preferably the weight % of b) in the polyol is greater than the weight % of c) in the polyol.

These amounts of c) may allow the properties provided to the polyol by the amounts of a) and b) in the polyol to provide suitable improvements to a polyurethane formed from the polyol.

The component c) may comprise at least one residue of one or more dicarboxylic acids which are not dimer fatty diacids (referred to herein as non-dimeric diacids). The component c) may be at least one residue of a non-dimeric diacid.

The non dimeric diacids may be aliphatic or aromatic (such as phthalic acid, isophthalic acid and terephthalic acid), and include dicarboxylic acids and their esters, preferably alkyl esters, thereof.

Preferably c) comprises at least one residue of a linear dicarboxylic acid having a carbon chain in the range from 4 to 12 carbon atoms, such as adipic acid, glutaric acid, succinic acid, pimelic acid, suberic acid, azelaic acid, sebacic acid, heptane dicarboxylic acid, octane dicarboxylic acid, nonane dicarboxylic acid, decane dicarboxylic acid, undecane dicarboxylic acid, and dodecane dicarboxylic acid. More preferably, c) comprises at least one residue of a linear dicarboxylic acid having 5 to 10 carbon atoms. Adipic acid is particularly preferred.

The non-dimeric diacid may comprise terminal carboxyl groups bridged by at least one cyclic group. The cyclic groups may be saturated or unsaturated cyclic groups, and may be selected from 4 to 7 membered rings. Preferably the or each cyclic group is selected from C5 or C6 cycloalkyls or C6 cycloaryl.

The term 'cycloalkyl' as used herein, unless otherwise defined, refers to an organic radical derived from a saturated hydrocarbon, and may be selected from cyclopentane or cyclohexane. The term 'cycloaryl' as used herein, unless otherwise defined, refers to an organic radical derived from an aromatic hydrocarbon by removal of one hydrogen, and may be phenyl.

In the embodiment where the terminal carboxyl groups are bridged by at least one cyclic group, suitable examples of non-dimeric diacids may be selected from terephthalic acid, (ortho) phthalic acid or isopthalic acid.

The component c) may comprise at least one residue of one or more diols which are not dimer fatty diols (referred to herein as non-dimeric diols). Preferably c) is at least one residue of a non-dimeric diol.

Preferably, c) is at least one residue of a diol having from 2 to 10 carbon atoms, more preferably from 5 to 8 carbon atoms.

Suitable non-dimeric diols may be independently selected from straight chain aliphatic diols or branched aliphatic diols, or a combination thereof.

Suitable non-dimeric diols include straight chain aliphatic diols such as ethylene glycol, diethylene glycol, 1,3-propylene glycol, dipropylene glycol, 1,4-butylene glycol, 1,6-hexylene glycol (also known as hexanediol) and mixtures thereof, branched diols such as neopentyl glycol, 3-methyl pentane glycol, 1,2-propylene glycol and mixtures thereof, and cyclic diols such as 1,4-bis(hydroxymethyl)cyclohexane and 1,4-cyclohexane-dimethanol and mixtures thereof. Hexanediol is particularly preferred.

Straight chain aliphatic diols may be independently selected from ethylene glycol, diethylene glycol, 1,3-propylene glycol (better known as 1,3-propanediol), 1,4-butanediol and 1,6-hexanediol.

Branched aliphatic diols may be independently selected from 1,2-propylene glycol, 1,2-butanediol, 2,3-butanediol, and 1,3-butanediol.

The component c) may comprises at least one residue of a polyether diol, for example polyethylene glycol, polypropylene glycol or polytertahydrofuran (also known as polytetramethylene ether glycol or PTMEG). The PTMEG may have a Mw of from 200 to 2000, preferably from 200 to 1000, more preferably from 200 to 500.

The component c) is preferably derived from renewable and/or bio-based sources. The level of this may be determinable by ASTM D6866 as a standardised analytical method for determining the bio-based content of samples using ¹⁴C radiocarbon dating. ASTM D6866 distinguishes carbon resulting from bio-based inputs from those derived from fossil-based inputs. Using this standard, a percentage of carbon from renewable sources can be calculated from the total carbon in the sample.

The component c) may have a renewable carbon content of at least 50 wt% when determined using ASTM D6866, preferably at least 65 wt%, more preferably at least 80 wt%.

The component c) may also comprise at least one residue of a polyol having a hydroxyl function greater than 2. Such polyols may include glycerol, pentaerythritol, or trimethylolpropane.

Preferably the component c) has only 2 functional groups selected from a carboxylic acid group, a hydroxyl group and mixtures thereof.

The polyol may be formed by a condensation reaction.

The polyol may comprise at least 2 ester bonds, preferably at least 3 ester bonds, more preferably at least 4 ester bonds, even more preferably at least 5 ester bonds.

The polyol may comprise at most 10 ester bonds, preferably at most 8 ester bonds, more preferably at most 7 ester bonds.

The polyol may be a polyester.

The polyol may comprise at least one ether bond. The polyol may be a polyesterether. Alternatively, the polyol may not comprise an ether bond.

The polyol may comprise at least one amide bond. The polyol may comprise at least one dimer fatty diamine residue. Alternatively, the polyol may not comprise an amide bond.

The polyol may be a polyesteramide. The polyol may be a polyesteretheramide.

The polyol is preferably formed from dicarboxylic acid to diol starting materials at a molar ratio in the range from 1:1 to 1:5, more preferably from 1:1.05 to 1:3, particularly preferably from 1:1.1 to 1:2, and especially preferably from 1:1.2 to 1:1.4. Thus, the amount of diol in the polyol is preferably present in molar excess so as to obtain a polyol terminated at both ends with hydroxyl groups.

The polyol preferably has a hydroxyl value (measured as described herein) in the range from 10 to 100, more preferably 30 to 90, particularly preferably 40 to 70, and especially preferably 50 to 60 mgKOH/g.

In addition, the polyol preferably has an acid value (measured as described herein) of less than 2, more preferably less than 1.7, particularly preferably less than 1.3, and especially preferably less than 1.0 mgKOH/g.

A polyurethane of the second aspect of the invention comprises a polyol of the first aspect.

The polyurethanes of the second aspect of the present invention may have one or more desired physical properties.

The polyurethane may further comprise an isocyanate or polyisocyanate.

The isocyanate component is preferably at least one isocyanate which has a functionality of at least 2, and may be an aliphatic isocyanate, such as hexamethylene 1,6-diisocyanate or isophorone diisocyanate (IPDI). Alternatively, the isocyanate is an aromatic isocyanate. Preferably, the isocyanate is an aliphatic isocyanate.

Suitable aromatic isocyanates may be selected from tolylene diisocyanate, m-phenylene diisocyanate, p-phenylene diisocyanate, xylylene diisocyanate, 4,4'-diphenylmethane diisocyanate, hexamethylene diisocyanate, isophorone diisocyanate, polymethylenepolyphenyl diisocyanate, 3,3'-dimethyl-4,4'-biphenylene diisocyanate, 3,3'-dimethyl-4,4'-diphenylmethane diisocyanate, 3,3-dichloro-4,4'-biphenylene diisocyanate, 1,5-naphthalene diisocyanate, or modified compounds thereof such as uretonimine-modified compounds thereof.

The isocyanate monomers may be used alone or as mixtures thereof. In a preferred embodiment, 4,4'-diphenylmethane diisocyanate (MDI) is used alone, or more preferably a mixture of MDI and a uretonimine-modified 4,4'-diphenylmethane diisocyanate (modified MDI) is employed. Alternatively, isophorone diisocyanate (IPDI) may preferably be used, especially for forming polyurethanes to be used in coatings or adhesives.

The polyurethane of the second aspect of the invention may be made by reacting a polyol of the first aspect of the invention with a polyisocyanate to form:
(i) the polyurethane; or
(ii) an isocyanate-terminated pre-polymer which is then reacted with a chain extender to form the polyurethane.

The method of forming polyurethane may optionally include the step of forming a prepolymer by reacting the polyester with an isocyanate to form an isocyanate-terminated prepolymer, and forming polyurethane from said prepolymer, optionally in the presence of a chain extender.

The prepolymer reaction mixture may preferably have an isocyanate content (measured as described herein) in the range from 5% to 30%, more preferably 15 to 23%, particularly 17% to 20%, and especially 18% to 19% NCO.

In one embodiment of the invention, at least one of the aforementioned isocyanates is reacted with at least one of the aforementioned polyesters, to form said prepolymer.

The ratio of isocyanate to polyester starting materials which are mixed together to react to form the prepolymer is preferably in the range from 20 to 80:20 to 80, more preferably 35 to 75:25 to 65, particularly 45 to 70:30 to 55, and especially 55 to 65:35 to 45 by weight.

The isocyanate is preferably used in molar excess relative to hydroxyl group content of the polyester, so as to obtain a reaction mixture containing isocyanate-terminated prepolymer and sufficient unreacted isocyanate, such that later addition of the chain extender can result in reaction to form the polyurethane foam, without the requirement for adding further isocyanate.

The polyurethane according to the present invention may be produced by efficiently mixing the polyol with isocyanate.

In the polyurethane synthesis, the NCO/OH ratio employed is preferably in the range from 1 to 1.2:1, more preferably 1 to 1.1:1., and particularly 1 to 1.03:1.

Alternatively, the polyurethane may be formed by mixing a prepolymer, formed as described herein, with isocyanate, optionally in the presence of chain extenders.

The polyol and isocyanate may be reacted at an elevated temperature. Said elevated temperature may be in the range from 50°C to 80 °C. Preferably, in the range from 60°C to 75°C.

A chain extender may optionally be present for forming the polyurethane. The chain extender may be in the form of a chain extender composition. The chain extender composition is preferably prepared by simple pre-mixing of, for example, the chain extender, a polyol of the first aspect of the invention and other additives (such as blowing agent, and/or urethane catalyst, and/or pigment and/or filler and/or blowing agent). At least one polyol may be added together with the chain extender to react with a prepolymer in order to form the polyurethane.

The chain extender component used to form the polyurethane suitably comprises a low molecular compound having two or more active hydrogen groups, for example polyols such as ethylene glycol, diethylene glycol, propylene glycol, 1,4-butylene glycol, 1,5-pentylene glycol, methylpentanediol, isosorbide (and other iso-hexides), 1,6-hexylene glycol, neopentyl glycol, trimethylolpropane, hydroquinone ether alkoxylate, resorcinol ether alkoxylate, glycerol, pentaerythritol, diglycerol, and dextrose; dimer fatty diol; aliphatic polyhydric amines such as ethylenediamine, hexamethylenediamine, and isophorone diamine; aromatic polyhydric amines such as methylene-bis(2-chloroaniline), methylenebis(dipropylaniline), diethyl-toluenediamine, trimethylene glycol di-p-aminobenzoate; alkanolamines such as diethanolamine, triethanolamine and diisopropanolamine.

In a preferred embodiment of the invention, the chain extender is a polyol, more preferably a diol, particularly having an aliphatic linear carbon chain comprising in the range from 1 to 10, and especially 3 to 5 carbon atoms. Preferred diols include ethylene glycol, propylene glycol, 1,4-butylene glycol, and 1,5-pentylene glycol. 1,4-butylene glycol is particularly preferred.

The molar ratio of chain extender to polyol of the first aspect of the invention employed is preferably in the range from 1 to 10:1, more preferably 1.5 to 8:1, particularly 2 to 5:1, and especially 2.5 to 4:1.

In the present invention, the chain extender composition may optionally contain other additives such as blowing agents, urethane promoting catalysts, pigments, fillers, blowing agents, surfactant, and stabilisers.

Suitable blowing agents include water, and fluorocarbons such as trichlorofluoromethane, dichlorodifluoromethane and trichlorodifluoroethane. The blowing agents may be used alone or as mixtures thereof.

Examples of urethane catalysts include tertiary amines such as triethylamine, 1,4-diazabicyclo[2.2.2.]octane (DABCO), N-methylmorpholine, N-ethylmorpholine, N,N,N',N'-tetramethylhexamethylenediamine, 1,2-dimethylimidazol; and tin compounds such as tin(II)acetate, tin(II)octanoate, tin(II)laurate, dibutyltin dilaurate, dibutyltin dimaleate, dioctyltin diacetate and dibutyltin dichloride. The catalysts may be used alone or as mixtures thereof.

Suitable surfactants include silicone surfactants such as dimethylpolysiloxane, polyoxyalkylene polyol-modified dimethylpolysiloxane and alkylene glycol-modified dimethylpolysiloxane; and anionic surfactants such as fatty acid salts, sulphuric acid ester salts, phosphoric acid ester salts and sulphonates.

Examples of the stabilisers include hindered phenol radical scavengers such as dibutylhydroxytoluene, pentaerythrityl-tetrakis[3-(3,5-di-t-butyl-4-hydroxyphenyl) propionate] and isooctyl-3-(3,5-di-t-butyl-4-hydroxyphenyl)propionate; antioxidants such as phosphorous acid compounds such as triphenylphosphite, triethylphosphite and triphenylphosphine; ultraviolet absorbing agents such as 2-(5-methyl-2-hydroxyphenyl)benzotriazole and a condensation product of methyl-3-[3-t-butyl-5-(2H-benzotriazole-2-yl)-4-hydroxyphenyl]propionate and polyethylene glycol.

Suitable pigments include inorganic pigments such as transition metal salts; organic pigments such as azo compounds; and carbon powder. Suitable fillers include inorganic fillers such as clay, chalk, and silica.

The dimer fatty residue content of the formed polyurethane is preferably in the range from 5 to 50%, more preferably 8 to 40%, particularly 12 to 30%, and especially 15 to 20% by weight.

The formed polyurethane is preferably derived from renewable and/or bio-based sources. The level of this may be determinable by ASTM D6866 as described herein.

Preferably, the polyurethane has a renewable carbon content of at least 50 % when determined using ASTM D6866. More preferably, at least 65 %. Most preferably, at least 80 %.

It has been found that use of known polyesters may make a polyurethane susceptible to hydrolysis, or degradation by UV/thermo-oxidation. These shortcomings limit the application possibilities of conventional polyurethanes. Polyurethanes formed using a polyol of the first aspect of the present invention are found to provide polyurethanes with good thermo-oxidative and UV stability. Additionally, said polyurethanes may have good thermal stability, and good hydrolytic stability thereby offering resistance against attack by acids, alkali, and alcohol.

The polyurethanes may be formed in to a dispersion, in particular if they are to be used in coating compositions or adhesive compositions. Said dispersions may comprise in the range from 10 wt.% to 80 wt.% polyurethane. Preferably, from 20 wt.% to 60 wt.% polyurethane. More preferably, from 30 wt.% to 50 wt.% polyurethane.

The polyurethane may be used in many applications. The polyurethane of the present invention may be used in coating compositions, adhesive compositions, sealant compositions or elastomers. In particular, the polyurethane may find application in adhesives or elastomers, preferably in elastomers.

Protective or decorative coatings prepared from a composition according to the present invention can be formulated with a wide variety of ingredients well known to those skilled in the art of coating formulation, including solvents, fillers, pigments, pigment dispersing agents, rheology modifiers, thixotropes, flow and leveling aids, defoamers, etc.

Coating compositions of the present invention can be applied by any number of techniques including spray, brush, roller, paint mitt, and the like. Numerous substrates are suitable for application of coatings of this invention with proper surface preparation, as is well understood in the art. Such substrates include, but are not limited to, many types of metal, particularly steel and aluminium, as well as concrete.

The coating compositions may be suitable for use as a primer coating on substrates such as concrete and steel. A preferred coating or overcoat layer to be used on top of a primer coating layer. Coatings of this invention can be applied and cured at ambient temperatures ranging from about 0°C to about 50°C.

The polyurethane may also be used in adhesive compositions. The adhesive may preferably be applicable to a suitable substrate, such as wood, plastic or metal, in situ as a free flowing viscous solid, and cured, by reacting with water present in the substrate, at ambient temperature. Adhesives based on polyurethane of the present invention are for example, used for the lamination of furniture front panels and automotive interior trim parts, and for the bonding of shoe soles. In these applications, strong and reliable initial bond strength (also known as green strength) is essential as the finished parts are often processed further immediately after the bonding process and short cycle times are fundamental. A polyol of the first aspect of the invention may improve the green strength of an adhesive composition formed from the polyol.

The adhesive may also comprise other optional components such as fillers, for example nylon, glass fibre, fumed silica, wood flour; and other agents such as pigments, antioxidants, stabilizers, flow additives etc.

The polyurethane of the present invention may also be used in elastomer compositions. These polyurethane elastomers may be solid elastomers or microcellular elastomers. The elastomers may be reinforced elastomers. The reinforced elastomers may comprise reinforcing fibres or fibre mats. The reinforcing fibres may comprise glass fibres, carbon fibres or polyester fibres.

The polyurethane elastomer may have a tensile strength at break measured according to ISO 527-2 norm of at least 80N, preferably at least 100N, more preferably at least 150N, even more preferably at least 200N. The tensile strength measured according to ISO 527-2 norm is a standard measurement which measures a standard elastomer sample. The tensile strength at break may be at most 400N.

The polyurethane elastomer may have a (maximum) elongation according to ISO 527-2 of at least 400%, preferably at least 450%, more preferably at least 500%, even more preferably at least 550%, especially preferably at least 600%. The elastomer may have a (maximum) elongation of at most 900%.

The modulus will be understood to represent the force (stress) required to produce a certain elongation (strain). For example, in the case of the 100% modulus, this is a measure of the tensile strength at 100% elongation. Compounds with a higher modulus will be understood to be more resilient and more resistant to extrusion.

The polyurethane elastomer may have a 100% modulus value of greater than 20 kg/cm². Preferably, the polyurethane elastomer has a 100% modulus value greater than 40 kg/cm².

The polyurethane elastomer may have a 300% modulus value of greater than 30 kg/cm². Preferably, the polyurethane elastomer has a 300% modulus value greater than 50 kg/cm².

The polyurethane elastomer may also exhibit good hardness properties. The hardness of the elastomer may be defined as the material's resistance to permanent indentation. The elastomer composition may have a Shore A hardness of at least 60 Shore A, preferably at least 70, more preferably at least 80. The Shore A hardness may be measured according to ISO 868 norm.

A particular advantage of the polyurethane according to the present invention is that it is resistant absorption of water, and has low moisture uptake/low moisture absorption. A coating composition comprising the polyurethane may absorb less than 10wt% water after immersion for 24 hours, preferably less than 8wt%, more preferably less than 6wt%.

All of the features described herein may be combined with any of the above aspects, in any combination.

### Examples

The present invention will now be described further by way of example only with reference to the following Examples. All parts and percentages are given by weight unless otherwise stated.

It will be understood that all tests and physical properties listed have been determined at atmospheric pressure and room temperature (i.e. about 20°C), unless otherwise stated herein, or unless otherwise stated in the referenced test methods and procedures.

Tests of polyurethane dispersions in coatings were performed at 23°C with a relative humidity of 50%.

Compounds as used in the following examples are identified as follows:
▪ 1,4-butanediol - a bio-based version is available from BioAmber
▪ 1,6-hexanediol
▪ Adipic acid (C₆ dicarboxylic acid) - a bio-based version is available from Verdezyne
▪ PRIPOL 1006 (TM) dimer fatty diacid - hydrogenated C₃₆ dicarboxylic acid ex Croda
▪ PRIPOL 2033 (TM) dimer fatty diol - hydrogenated C₃₆ dimer diol ex Croda
▪ C18 diacid - Saturated linear C18 dicarboxylic acid produced according to Example M1 below
▪ C26 diacid - Saturated linear C26 dicarboxylic acid produced according to Example M2 below
▪ Diethyleneglycol (DEG)
▪ Poly(tetramethylene ether) glycol (PTMEG also known as polyTHF) e.g. PTMEG 250 = Mw 250 and PTMEG 2000 = Mw 2000
▪ Dimethylolpropionic acid (DMPA)
▪ Isophorone diisocyanate (IPDI)
▪ N-methyl pyrrolidone (NMP)
▪ Ethylene diamine (EDA)
▪ Triethylamine (TEA)

Test methods:
▪ Number average molecular weight was determined by end group analysis with reference to the hydroxyl value.
▪ Weight average molecular weight was determined by end group analysis with reference to the hydroxyl value.
▪ The hydroxyl value is defined as the number of mg of potassium hydroxide equivalent to the hydroxyl content of 1g of sample, and was measured by acetylation followed by hydrolysation of excess acetic anhydride. The acetic acid formed was subsequently titrated with an ethanolic potassium hydroxide solution.
▪ The acid value is defined as the number of mg of potassium hydroxide required to neutralise the free fatty acids in 1 g of sample, and was measured by direct titration with a standard potassium hydroxide solution.
▪ The isocyanate (NCO) value or content is defined as the weight % content of isocyanate in the sample and was determined by reacting with excess dibutylamine, and back titrating with hydrochloric acid.
▪ Hardness was measured using a Shore A meter on a 10 mm thick sample according to ISO 868. A mean value of 10 readings was calculated.
▪ König Hardness was measured using DIN ISO 2815
▪ Particle size of polyurethane dispersions was measured with a Zetasizer using dynamic light scattering
▪ Elongation was measured using an Instron tensile tester according to ISO 527-2 norm.
▪ Tensile Strength was measured using an Instron tensile tester according to ISO 527-2 norm.
▪ Modulus was calculated as the tensile strength required to achieve a predetermined elongation.
▪ Hydrolysis Samples were aged by placing dumbells of the material in a climate chamber at 70 C and > 98% relative humidity for periods of 2 and 4 weeks. The elongation at break of the "aged" samples was determined as above and the values compared to the original figures (on percentage retention terms).

### Example M1: production of C18 diacid

100 g methyl oleate (purified by aluminium-oxide treatment) was heated to 100°C. 13 ppm of ([1,3-bis(2,4,6-trimethylphenyl)-2-imidazolidinyliden]dichloro[(2-isopropoxy)(5-trifluoracetamido)benzyliden]ruthenium(II)) was dissolved in 1 ml toluene, and this was added to the methyl oleate.

After 30 seconds 43.6% conversion was reached, and after 120 seconds the reaction equilibrium conversion was reached. The resulting reaction mixture contained 24.8% 9-octadecene, 25.2% 9-octadecenedioic acid dimethyl ester and approximately 50% methyl oleate according to Gas Chromatography analysis. The reaction mixture was treated with a treated clay (Tonsil 210FF, 5g) while stirring at 80°C for 60 minutes. This mixture was filtered over filter paper to give an essentially catalyst-free product.

The catalyst-free product was purified using fractional distillation under vacuum of 2 to 9 mbar, by first distilling off the alkene and methyl oleate, and then collecting dimethyl octadecenedioate in the temperature range of 220-240°C. Gas Chromatography analysis indicated a purity of >95%.

Purified dimethyl octadecenedioate (200g) was charged into a 400 ml volume hydrogenation autoclave vessel, 0.18g palladium 5% on carbon hydrogenation catalyst was added, and the autoclave heated to 160°C under 15 bar of hydrogen for 45 minutes, after which the hydrogen uptake has stopped, indicating reaction completion. The catalyst was filtered, resulting in dimethyl octadecanedioate, >95% purity according to Gas Chromatography analysis.

Dimethyl octadecanedioate (150g) was combined with 300g methanol, 100g water and 200g of a 50% KOH solution in water. This was heated to reflux for 1 h, and subsequently cooled to 55°C. 185g of an 85% H₃PO₄ solution in 750 ml water was added gradually upon which a solid precipiatete was formed which was stirred for 1 h. The solids were filtered off and washed with water until the filtrate had neutral pH as indicated using indicator paper. The solids were dried under vacuum (approx. 10 mbar, 60°C) until no further mass loss occurred, resulting in 1,18-octadecanedioic acid. In the following examples, this 1,18-octadecanedioic acid will be referred to as C18 diacid.

### Example M2: production of C26 diacid

100 g methyl erucate (purified by aluminium-oxide treatment) was heated to 100°C. 105 ppm of ([1,3-bis(2,4,6-trimethylphenyl)-2-imidazolidinyliden]dichloro[(2-isopropoxy)(5-trifluoracetamido)benzyliden]]ruthenium(II) was dissolved in 1 ml toluene, and this was added to the methyl erucate.

After 30 seconds the reaction equilibrium conversion was reached. The resulting reaction mixture contained 20.6% 9-octadecene, 28.4% 13-hexacosenedioic acid dimethyl ester and approximately 50% methyl erucate according to Gas Chromatography analysis.

In order to produce 1,26-hexacosanediacid (C26 diacid) from this reaction mixture, the same steps were followed as given above in Example M1 for octadecanedioic acid (C18 diacid). However, the fractional distillation step was modified in that the product (dimethyl hexacosenedioiate) remained in the bottom fraction of the distillation due to its high molecular weight. In the following examples, the 1,26-hexacosanedioic acid produced by this example will be referred to as C26 diacid.

### Comparative Example P1: Formation of Polyol 1 (a polyester polyol not according to the invention)

50 parts by weight Pripol 1006, 50 parts Adipic acid (C6) and 59.3 parts hexanediol (C6) were charged to a reactor equipped with a gas inlet, a stirrer, a thermometer and a condenser. The temperature in the reactor was raised to 220-230°C under normal pressure in a nitrogen atmosphere. An esterification reaction was conducted under these conditions until the desired acid and hydroxyl value were obtained. The evaluation results of the obtained polyester polyol gave an acid value < 1 mg KOH/g and a hydroxyl value of 56 mg KOH/g, equivalent to a number average molecular weight (Mn) of about 2000.

### Example P2: Formation of Polyol 2 (a C18 diacid based polyester polyol)

50 parts by weight Pripol 1006 (C36 dimer fatty diacid), 50 parts C18-diacid (produced according to Example M1) and 36.9 parts hexanediol (C6) were charged to a reactor equipped with a gas inlet, a stirrer, a thermometer and a condenser. The temperature was raised to 220-230°C under normal pressure in a nitrogen atmosphere. An esterification reaction was conducted under these conditions until the desired acid and hydroxyl value were obtained. The evaluation results of the obtained polyester polyol gave an acid value < 1 mg KOH/g and a hydroxyl value of 56 mg KOH/g, equivalent to a number average molecular weight (Mn) of about 2000.

### Example P3: Formation of Polyol 3 (a C18 diacid based polyester polyol)

80 parts by weight Pripol 1006 (C36 dimer fatty diacid), 20 parts C18-diacid (produced according to Example M1) and 31.3 parts hexanediol (C6) were charged to a reactor equipped with a gas inlet, a stirrer, a thermometer and a condenser. The temperature was raised to 220-230°C under normal pressure in a nitrogen atmosphere. An esterification reaction was conducted under these conditions until the desired acid and hydroxyl value were obtained. The evaluation results of the obtained polyester polyol gave an acid value < 1 mg KOH/g and a hydroxyl value of 56 mg KOH/g, equivalent to a number average molecular weight (Mn) of about 2000.

### Example P4: Formation of Polyol 4 (a C18 diacid based polyol including DEG)

50 parts by weight Pripol 1006 (C36 dimer fatty diacid), 50 parts C18-diacid (produced according to Example M1) and 32.8 parts Diethyleneglycol (DEG) were charged to a reactor equipped with a gas inlet, a stirrer, a thermometer and a condenser. The temperature was raised to 220-230°C under normal pressure in a nitrogen atmosphere. An esterification reaction was conducted under these conditions until the desired acid and hydroxyl value were obtained. The evaluation results of the obtained polyol gave an acid value < 1 mg KOH/g and a hydroxyl value of 56 mg KOH/g, equivalent to a number average molecular weight (Mn) of about 2000.

### Example P5: Formation of Polyol 5 (a C18-diacid based polyester polyol including dimer fatty diol)

100 parts by weight C18-diacid (produced according to Example M1) and 318.2 parts Pripol 2033 (C36 dimer fatty diol) were charged to a reactor equipped with a gas inlet, a stirrer, a thermometer and a condenser. The temperature was raised to 220-230°C under normal pressure in a nitrogen atmosphere. An esterification reaction was conducted under these conditions until the desired acid and hydroxyl value were obtained. The evaluation results of the obtained polyester polyol gave an acid value <1 mg KOH/g and a hydroxyl value of 89 mg KOH/g, equivalent to a number average molecular weight (Mn) of about 1200.

### Example P6: Formation of Polyol 6 (a C18-diacid based poly(ether)ester polyol)

58 parts by weight Pripol 1006 (C36 dimer fatty diacid), 50 parts C18-diacid (produced according to Example M1) and 88 parts PTMEG 250, were charged to a reactor equipped with a gas inlet, a stirrer, a thermometer and a condenser. The temperature was raised to 220-230°C under normal pressure in a nitrogen atmosphere. An esterification reaction was conducted under these conditions the until the desired acid and hydroxyl value were obtained. The evaluation results of the obtained polyol gave an acid value < 1 mg KOH/g and a hydroxyl value of 56 equivalent to a number average molecular weight (Mn) of about 2000.

A comparison of the components of the polyols P1 to P6 is given in Table 1 below for guidance.

**Table 1: Comparison of the ingredients of the polyols P1 to P6**

| **Components of the polyol (parts by weight / wt%)** | **P1** | **P2** | **P3** | **P4** | **P5** | **P6** |
|---|---|---|---|---|---|---|
| **Acid component(s)** | | | | | | |
| PRIPOL 1006 (C36 dimer fatty diacid) | 50 / 31.4wt% | 50 / 36.5wt% | 80 / 61wt% | 50 / 37.7wt% | | 58/ 30wt% |
| Adipic acid | 50 / 31.4wt% | | | | | |
| C18-diacid | | 50 / 36.5wt% | 20 / 15.2wt% | 50 / 37.7wt% | 100 / 23.9wt% | 50 / 25wt% |

| **Alcohol component** | | | | | | |
|---|---|---|---|---|---|---|
| Hexanediol | 59.3 / 37.2wt% | 36.9 / 27wt% | 31.3 / 23.8wt% | | | |
| Diethylene glycol | | | | 32.8 / 24.6wt% | | |
| Pripol 2033 (C36 dimer fatty diol) | | | | | 318.2 / 76.1 wt% | |
| PTMEG 250 | | | | | | 88 / 45wt% |

### Example PUD6: Polyurethane Dispersion formed from Polyol P6 compared with comparative PUD

A polyurethane dispersion (PUD6) was formed using Polyol P6. The PUD synthesis was performed using the pre-polymer process.

### Ingredients of the PUD:

| | |
|---|---|
| 100 g | Polyol P6 |
| 13 g | Dimethylolpropionic acid (DMPA) |
| 60.1 g | Isophorone diisocyanate (IPDI)) |
| 25 g | N-methyl pyrrolidone (NMP) |
| 371.14 g | water |
| 4.3g | Ethylene diamine (EDA) |
| 9.6 g | Triethylamine (TEA) |

The polyol P6, DMPA and NMP (solvent) were dried at 120°C under nitrogen. After cooling to 70°C, dibutyl tin dilaurate (DBTL) catalyst (0.05%wt on pre-polymer) and slowly IPDI (aliphatic diisocyanate) are added to the reaction until the desired NCO% has been reached. Then at 60°C TEA is added for neutralising the DMPA carboxylic acid groups, during 0.5 to 1 hour, followed by cooling to 40-55°C. Then the prepolymer is dispersed in demineralised water, adding slowly during 1 hour under vigorous stirring. At 25°C the prepolymer is chain extended with EDA, added drop-wise and reacted 2 hours. Result is a 40% solids PUD. Acetone can be used as processing aid, to reduce viscosity, and distilled off from the final PUD.

A comparative PUD using 100g of a PTMEG Mw2000 polyol instead of polyol P6 was made following the same steps as above.

A comparison of selected physical properties of PUD6 and the comparative PUD is given in Table 2 below.

### Evaluation methods for Polyurethane Dispersions:

Particle size: Zetasizer using dynamic light scattering
König hardness: tested using DIN ISO 2815
Chemical resistance: Spot test, rating 0 = undamaged to 5 = complete damage
Water absorption: determined by measuring weight increase after 24h in demineralised water at room temperature

**Table 2: Evaluation of coating PUD6 from polyol P6 compared with comparative PUD**

| | PUD6 using Polyol P6 | Comparative PUD using PTMEG |
|---|---|---|
| Particle size nm | 85.4 | 102 |
| König hardness s | 32 | 44 |
| Water absorption (24h) (% weight increase) | 4 | 8 |
| Chemical resistance to: | | |
| | | |
| Ammonia (10%) (2 min) | 0-1 | 2-3 |
| EtOH (50%, 1 hour) | 3 | 4-5 |
| Water (16 hour) | 2 | 3 |
| Acetic acid (1 hour) | 4 | 5 |

It can be seen from the results in the above Table 2 that PUD6 based on the C18 diacid based polyol P6 has a similar particle size to the comparative PUD. PUD6 has improved water absorption resistance compared with the PTMEG based PUD. Furthermore the overall resistance to the tested chemicals is higher for PUD6 than for the comparative PUD.

### Examples E1 to E5: Polyurethane Elastomers formed from Polyols P1 to P5

Polyurethane elastomers were made from Polyol 1 of Comparative Example P1 (E1 - comparative example), Polyol 2 of Example P2 (E2), Polyol 3 of Example P3 (E3), Polyol 4 of Example P4 (E4) and Polyol 5 of Example P5 (E5)

The polyurethane elastomers were prepared using 1 part by weight of Polyol 1, 2, 3, 4 or 5, 0.6 parts 1,4-butanediol (BDO) as a chain extender, and 1.7 parts 4,4'-5 diphenylmethane diisocyanate (MDI), using a one-shot method.

To form the elastomer E1 to E5, Polyol 1, 2, 3, 4 or 5 and 1,4-butanediol (BDO) chain extender were blended and pre-heated at 50°C and degassed in a degassing chamber. The Polyol and BDO were mixed thoroughly, after which molten 4,4'-diphenylmethane diisocyanate (MDI) was added. The reaction mixture was stirred efficiently, transferred to the degassing chamber for a few minutes until significant viscosity increase occurred. The mixture was then poured into a preheated 100°C steel mould. The mould was closed and transferred to an oven at 100°C. After 2 hours the elastomer was de-moulded and further cured at 100°C for another 18 hours.

The physical properties of each elastomer E1 to E5 were determined and are shown in Table 3 below.

**Table 3: Physical properties of Elastomers E1 to E5 with component ratio of 1 part polyol/0.6 parts BDO/1.7 parts MDI**

| | **E1** | **E2** | **E3** | **E4** | **E5** |
|---|---|---|---|---|---|
| Hardness (Shore A) | 50 | 86 | 80 | 79 | 83 |
| Tensile strength at break (N) | 60 | 176 | 92 | 118 | 294 |
| Elongation (%) | 830 | 620 | 840 | 715 | 427 |
| 100% modulus (kg/cm²) | 11 | 45 | 22 | 42 | 79 |
| 300% modulus (kg/cm²) | 19 | 69 | 35 | 54 | 123 |

| **Hydrolysis resistance:** | | | | | |
|---|---|---|---|---|---|
| **performance of Elastomers after immersion for 1 week @90°C in water** | | | | | |
| Retention of Elongation (%) | 85 | 100 | 97 | * | 95 |

| | | | | | |
|---|---|---|---|---|---|
| * = not evaluated | | | | | |

It can be seen from the results in the above Table 3 and using the comparison of polyol components in Table 1 that the polyurethane elastomer E2 shows a higher Shore A hardness than E1 at a similar wt% of aliphatic diacid (ie. adipic acid in E1 and C18 diacid in E2). Furthermore with an increased wt% of C18 diacid in the elastomer E2 compared to E3, the hardness and tensile strength go up in E2 compared to E3 but E2 still has a good amount of elongation.

By lowering the C18 diacid wt% in the elastomer E3 compared to E2 it can be seen that the elongation is improved in E3 over E2 and E3 still maintains a higher hardness and tensile strength than the comparative adipic acid containing elastomer E1.

After hydrolysis the C18 diacid containing elastomers E2 to E5 show an improved retention of elongation than adipic acid containing elastomer E1.

It is to be understood that the invention is not to be limited to the details of the above embodiments, which are described by way of example only.

## Claims

1. A polyol comprising:
a) at least one dimer fatty residue selected from a dimer fatty diacid residue and a dimer fatty diol residue; and
b) at least one residue of a linear or branched C17 to C32 dicarboxylic acid or diol;
wherein the polyol comprises at least two hydroxyl end groups.

2. A polyol as claimed in claim 1 wherein the C17 to C32 dicarboxylic acid or diol is a linear dicarboxylic acid or diol.

3. A polyol as claimed in claim 1 or 2 wherein the weight ratio of a) to b) in the polyol is in the range 90:10 to 30:70, preferably in the range 85:15 to 45:55.

4. A polyol as claimed in any of claims 1 to 3 wherein the weight % of a) in the polyol is at least the weight % of b) in the polyol.

5. A polyol as claimed in any preceding claim wherein the C17 to C32 dicarboxylic acid or diol is a C18 to C26 dicarboxylic acid or diol, preferably a C18 or C26 dicarboxylic acid or diol.

6. A polyol as claimed in any preceding claim wherein the C17 to C32 dicarboxylic acid or diol is derived from a C17 to C32 diacid or dialkyl ester which is obtained by a metathesis reaction, preferably a self-metathesis reaction.

7. A polyol as claimed in any preceding claim which further comprises:
c) at least one residue of a C2 to C16 acid or alcohol which has at least 2 functional groups selected from a carboxylic acid group, a hydroxyl group and mixtures thereof.

8. A polyol as claimed in claim 7 wherein c) is at least one residue of a diol comprising from 2 to 10 carbon atoms, preferably from 5 to 8 carbon atoms.

9. A polyol as claimed in claim 7 or 8 wherein the weight % of a) in the polyol is greater than the weight % of c) in the polyol.

10. A polyol as claimed in claim 7, 8 or 9 wherein the weight % of b) in the polyol is greater than the weight % of c) in the polyol.

11. A polyurethane comprising a polyol as claimed in any of claims 1 to 10.

12. A polyurethane as claimed in claim 11 wherein the polyurethane is a polyurethane elastomer with a tensile strength at break of at least 80 N when measured according to ISO 527-2.

13. A polyurethane as claimed in claim 11 or 12 wherein the polyurethane is a polyurethane elastomer with a Shore A hardness of at least 70 when measured according to ISO 868.

14. A polyurethane as claimed in claim 11, 12 or 13 wherein the polyurethane is a polyurethane elastomer with a 100% modulus of at least 20 kg/cm² when measured according to ISO 527-2.

15. A method of making a polyurethane comprising reacting a polyol as claimed in any of claims 1 to 10 with an isocyanate to form:
(i) the polyurethane; or
(ii) an isocyanate-terminated pre-polymer which is then reacted with a chain extender to form the polyurethane.

16. Use of a polyol as claimed in any of claims 1 to 10 to form a polyurethane.

17. An adhesive, coating, elastomer or sealant comprising a polyol as claimed in any of claims 1 to 10 or a polyurethane as claimed in any of claims 11 to 14.

## Patentansprüche

1. Polyol, umfassend:
a) mindestens einen Dimerfettrest, der aus einem Dimerfettsäurerest und einem Dimerfettdiolrest ausgewählt ist; und
b) mindestens einen Rest einer linearen oder verzweigten C17- bis C32-Dicarbonsäure oder eines linearen oder verzweigten C17- bis C32-Diols;
wobei das Polyol mindestens zwei Hydroxylendgruppen umfasst.

2. Polyol nach Anspruch 1, wobei es sich bei der C17-bis C32-Dicarbonsäure bzw. dem C17- bis C32-Diol um eine lineare Dicarbonsäure bzw. ein lineares Diol handelt.

3. Polyol nach Anspruch 1 oder 2, wobei das Gewichtsverhältnis von a) zu b) in dem Polyol im Bereich von 90:10 bis 30:70, vorzugsweise im Bereich von 85:15 bis 45:55, liegt.

4. Polyol nach einem der Ansprüche 1 bis 3, wobei der Gew.-%-Anteil von a) in dem Polyol mindestens gleich dem Gew.-%-Anteil von b) in dem Polyol ist.

5. Polyol nach einem der vorhergehenden Ansprüche, wobei es sich bei der C17- bis C32-Dicarbonsäure bzw. dem C17- bis C32-Diol um eine C18- bis C26-Dicarbonsäure bzw. ein C18- bis C26-Diol, vorzugsweise eine C18- bis C26-Dicarbonsäure bzw. ein C18- bis C26-Diol, handelt.

6. Polyol nach einem der vorhergehenden Ansprüche, wobei sich die C17- bis C32-Dicarbonsäure bzw. das C17- bis C32-Diol von einer C17- bis C32-Disäure bzw. einem C17- bis C32-Dialkylester, die bzw. der durch eine Metathesereaktion, vorzugsweise eine Selbstmetathesereaktion, erhalten wird.

7. Polyol nach einem der vorhergehenden Ansprüche, das ferner Folgendes umfasst:
c) mindestens einen Rest einer C2- bis C16-Säure bzw. eines C2- bis C16-Alkohols mit mindestens 2 funktionellen Gruppen, die aus einer Carbonsäuregruppe, einer Hydroxylgruppe und Mischungen davon ausgewählt sind.

8. Polyol nach Anspruch 7, wobei es sich bei c) um mindestens einen Rest eines Diols mit 2 bis 10 Kohlenstoffatomen, vorzugsweise 5 bis 8 Kohlenstoffatomen, handelt.

9. Polyol nach Anspruch 7 oder 8, wobei der Gew.-%-Anteil von a) in dem Polyol größer ist als der Gew.-%-Anteil von c) in dem Polyol.

10. Polyol nach Anspruch 7, 8 oder 9, wobei der Gew.-%-Anteil von b) in dem Polyol größer ist als der Gew.-%-Anteil von c) in dem Polyol.

11. Polyurethan, umfassend ein Polyol nach einem der Ansprüche 1 bis 10.

12. Polyurethan nach Anspruch 11, wobei es sich bei dem Polyurethan um ein Polyurethan-Elastomer mit einer Reißfestigkeit von mindestens 80 N bei Messung gemäß ISO 527-2 handelt.

13. Polyurethan nach Anspruch 11 oder 12, wobei es sich bei dem Polyurethan um ein Polyurethan-Elastomer mit einer Shore-A-Härte von mindestens 70 bei Messung gemäß ISO 868 handelt.

14. Polyurethan nach Anspruch 11, 12 oder 13, wobei es sich bei dem Polyurethan um ein Polyurethan-Elastomer mit einem 100%-modul von mindestens 20 kg/cm² bei Messung gemäß ISO 527-2 handelt.

15. Verfahren zur Herstellung eines Polyurethans, bei dem man ein Polyol nach einem der Ansprüche 1 bis 10 mit einem Isocyanat zu:
(i) dem Polyurethan oder
(ii) einem isocyanatterminierten Prepolymer, das dann mit einem Kettenverlängerungsmittel zu dem Polyurethan umgesetzt wird,
umsetzt.

16. Verwendung eines Polyols nach einem der Ansprüche 1 bis 10 zur Bildung eines Polyurethans.

17. Klebstoff, Beschichtung, Elastomer oder Dichtstoff, umfassend ein Polyol nach einem der Ansprüche 1 bis 10 oder ein Polyurethan nach einem der Ansprüche 11 bis 14.

## Revendications

1. Polyol comprenant :
a) au moins un résidu gras dimère choisi parmi un résidu de diacide gras dimère et un résidu de diol gras dimère ; et
b) au moins un résidu d'un diol ou acide carboxylique linéaire ou ramifié en C17 à C32 ;
où le polyol comprend au moins deux groupements terminaux hydroxyle.

2. Polyol selon la revendication 1, où le diol ou acide carboxylique en C17 à C32 est un diol ou acide dicarboxylique linéaire.

3. Polyol selon la revendication 1 ou 2, où le rapport massique de a) sur b) dans le polyol est compris dans l'intervalle 90:10 à 30:70, préférentiellement dans l'intervalle 85:15 à 45:55.

4. Polyol selon l'une quelconque des revendications 1 à 3, où le pourcentage massique de a) dans le polyol est au moins égal au pourcentage massique de b) dans le polyol.

5. Polyol selon l'une quelconque des revendications précédentes, où le diol ou acide dicarboxylique en C17 à C32 est un diol ou acide dicarboxylique en C18 à C26, préférentiellement un diol ou acide dicarboxylique en C18 à C26.

6. Polyol selon l'une quelconque des revendications précédentes, où le diol ou acide dicarboxylique en C17 à C32 est dérivé d'un ester dialkylique ou diacide en C17 à C32 qui est obtenu par une réaction de métathèse, préférentiellement une réaction d'auto-métathèse.

7. Polyol selon l'une quelconque des revendications précédentes, qui comprend en outre :
c) au moins un résidu d'un alcool ou acide en C2 à C16 qui comporte au moins 2 groupements fonctionnels choisis parmi un groupement acide carboxylique, un groupement hydroxyle et leurs mélanges.

8. Polyol selon la revendication 7, où c) est au moins un résidu d'un diol comprenant entre 2 et 10 atomes de carbone, préférentiellement entre 5 et 8 atomes de carbone.

9. Polyol selon la revendication 7 ou 8, où le pourcentage massique de a) dans le polyol est supérieur au pourcentage massique de c) dans le polyol.

10. Polyol selon la revendication 7, 8 ou 9, où le pourcentage massique de b) dans le polyol est supérieur au pourcentage massique de c) dans le polyol.

11. Polyuréthane comprenant un polyol selon l'une quelconque des revendications 1 à 10.

12. Polyuréthane selon la revendication 11, où le polyuréthane est un élastomère de polyuréthane de résistance à la traction à la rupture d'au moins 80 N comme mesuré selon ISO 527-2.

13. Polyuréthane selon la revendication 11, où le polyuréthane est un élastomère de polyuréthane de dureté Shore A d'au moins 70 comme mesuré selon ISO 868.

14. Polyuréthane selon la revendication 11, 12 ou 13 où le polyuréthane est un élastomère de polyuréthane de modulation pour cent d'au moins 20 kg/cm² comme mesuré selon ISO 527-2.

15. Procédé de fabrication d'un polyuréthane comprenant la réaction d'un polyol selon l'une quelconque des revendications 1 à 10 avec un isocyanate pour former :
(i) le polyuréthane ; ou
(ii) un prépolymère à terminaisons isocyanate et réagit ensuite avec un agent d'extension de chaînes pour former le polyuréthane.

16. Utilisation d'un polyol selon l'une quelconque des revendications 1 à 10 pour former un polyuréthane.

17. Adhésif, revêtement, élastomère ou étanchéifiant comprenant un polyol selon l'une quelconque des revendications 1 à 10 ou un polyuréthane selon l'une quelconque des revendications 11 à 14.
